# EUROPÄISCHE PATENTSCHRIFT

(11) **EP 4 665 596 B1**
(45) Veröffentlichungstag und Bekanntmachung des Hinweises auf die Patenterteilung: **23.09.2026**
(21) Anmeldenummer: 24701658.7
(22) Anmeldetag: 22.01.2024
(51) Int. Cl.: B60G 17/016

(54) **VERFAHREN ZUR VERRINGERUNG ODER VERMEIDUNG VON KINETOSE**
METHOD FOR REDUCING OR PREVENTING KINETOSIS
PROCÉDÉ DE RÉDUCTION OU DE PRÉVENTION DE LA CINÉTOSE

(30) Priorität: 13.02.2023 DE 102023000479
(43) Veröffentlichungstag der Anmeldung: 24.12.2025
(73) Patentinhaber: Mercedes-Benz Group AG, 70372 Stuttgart (DE)
(72) Erfinder: BOHRMANN, Dominique, 73207 Plochingen (DE)
(74) Vertreter: Novagraaf Group
(86) Internationale Anmeldenummer: PCT/EP2024/051455
(87) Internationale Veröffentlichungsnummer: WO 2024/170225

(56) Entgegenhaltungen:
- EP-A1- 3 888 958
- WO-A1-2022/018141
- DE-A1- 102018 129 992

## Beschreibung

Die Erfindung betrifft ein Verfahren zur Verringerung oder Vermeidung von Kinetose.

Aus dem Stand der Technik ist, wie in der DE 10 2019 003 429 A1 beschrieben, ein Verfahren zur Prädiktion und Verringerung kinetosebedingter Störungen eines Insassen im Fahrbetrieb eines Fahrzeuges bekannt. Der Insasse wird zumindest mittels einer Fahrzeugkamera erfasst. In Abhängigkeit von auf den Insassen wirkenden Reizen, einer individuellen Anfälligkeit des Insassen in Bezug auf Kinetose und einer Art einer während des Fahrbetriebes ausgeübten Tätigkeit wird eine Kennzahl ermittelt, welche die Wahrscheinlichkeit eines Einsetzens kinetosebedingter Störungen angibt. In Abhängigkeit der ermittelten Kennzahl wird zumindest eine Einzelmaßnahme eines Maßnahmenkataloges zur Prävention von kinetosebedingten Störungen dem Insassen empfohlen oder automatisch eingeleitet.

In der EP 3 888 958 A1 werden Verfahren und System zur Steuerung der Bewegung einer Fahrzeugkarosserie und eines Fahrerlebnisses beschrieben. Ein Verfahren zur Minderung der Reisekrankheit in einem Fahrzeug umfasst ein Antizipieren eines bevorstehenden Kurvenfahrmanövers beim Führen des Fahrzeugs auf einer Straße. Vor Einleitung des Kurvenfahrmanövers wird ein Aktor eines aktiven Federungssystems betätigt, um eine Rollbewegung in einem Teil des Fahrzeugs zu erzeugen, wobei der Grad der erzeugten Rollbewegung auf einer Größe der Kurve und/oder auf einer Fahrgeschwindigkeit des Fahrzeugs basiert.

Aus der WO 2022/018141 A1 sind ein Verfahren und ein Steuerungssystem zur Steuerung einer aktiven Federung eines Straßenfahrzeugs mit einer Fahrzeugkarosserie und mehreren Rädern bekannt. Das Steuerungssystem umfasst Regler und ist so konfiguriert, dass es Informationen empfängt, die auf die Notwendigkeit einer positiven oder negativen Fahrzeugbeschleunigung in einer ersten Achse hinweisen, und die aktive Federung so steuert, dass sie in Abhängigkeit vom Empfang einer solchen Information vor Beginn der Fahrzeugbeschleunigung den Winkel der Fahrzeugkarosserie relativ zu den Rädern um eine senkrecht zur ersten Achse stehende zweite Achse ändert.

In der DE 10 2018 129 992 A1 wird ein Verfahren zum Betreiben einer aktiven Fahrwerkskomponente eines zweispurigen Fahrzeugs beschrieben. Der Fahrzeugaufbau des Fahrzeugs ist bei Befahren einer Kurve um eine Achse parallel zur Fahrzeuglängsachse durch die aktive Fahrwerkskomponente gegenüber einer Horizontalebene neigbar, sodass eine auf den Fahrzeuginsassen während der Kurvenfahrt wirkende Querkraft kompensiert wird. Der maximale Neigungswinkel des Fahrzeugaufbaus wird in Abhängigkeit der Fahrsituation und/oder in Abhängigkeit eines aktuellen Fahrzeugmodus begrenzt.

Der Erfindung liegt die Aufgabe zu Grunde, ein gegenüber dem Stand der Technik verbessertes Verfahren zur Verringerung oder Vermeidung von Kinetose anzugeben.

Die Aufgabe wird erfindungsgemäß gelöst durch ein Verfahren zur Verringerung oder Vermeidung von Kinetose mit den Merkmalen des Anspruchs 1.

Vorteilhafte Ausgestaltungen der Erfindung sind Gegenstand der Unteransprüche.

In einem erfindungsgemäßen Verfahren zur Verringerung oder Vermeidung von Kinetose bei einem Insassen im Fahrbetrieb eines Fahrzeugs wird ein Verlauf einer dem Fahrzeug vorausliegenden Fahrstrecke ermittelt, beispielsweise anhand einer digitalen Straßenkarte und einer, beispielsweise mittels eines globalen Navigationssatellitensystems, ermittelten aktuellen Position des Fahrzeugs und/oder mittels einer Umgebungserfassungssensorik des Fahrzeugs. Die Umgebungserfassungssensorik des Fahrzeugs weist als Sensoren beispielsweise mindestens eine Kamera, beispielsweise Monokamera oder Stereokamera, und/oder mindestens einen Radarsensor und/oder mindestens einen Lidarsensor und/oder mindestens einen Ultraschallsensor auf. Sie kann beispielsweise auch mehrere gleiche oder unterschiedliche Sensoren aufweisen. Mittels der Umgebungserfassungssensorik kann der Verlauf der dem Fahrzeug vorausliegenden Fahrstrecke beispielsweise durch Erfassen der Fahrstrecke und/oder von Streckenbegrenzungen der Fahrstrecke und/oder durch Erfassen mindestens eines den Verlauf der dem Fahrzeug vorausliegenden Fahrstrecke anzeigenden Verkehrszeichens oder Hinweisschildes ermittelt werden. Zusätzlich zur Verwendung beispielsweise der digitalen Straßenkarte und der ermittelten aktuellen Position des Fahrzeugs und/oder zur Verwendung der Umgebungserfassungssensorik des Fahrzeugs können beispielsweise Eingangsinformationen des Insassen für die Ermittlung des Verlaufs der dem Fahrzeug vorausliegenden Fahrstrecke verwendet werden, zum Beispiel ein Zielort, der vom Insassen beispielsweise in ein Navigationssystem des Fahrzeugs eingegeben wurde, und/oder eine vom Insassen angegebene präferierte Fahrstrecke und/oder vom Insassen angegebene präferierte Streckeneigenschaften.

Erfindungsgemäß wird anhand des ermittelten Verlaufs der dem Fahrzeug vorausliegenden Fahrstrecke eine nächste auf den Insassen einwirkende Querbeschleunigung und/oder eine daraus resultierende Querkraft prognostiziert. Diese auf den Insassen einwirkende Querbeschleunigung ist insbesondere eine Zentrifugalbeschleunigung. Sie wird insbesondere durch einen als eine Kurve ausgebildeten Streckenabschnitt verursacht, d. h. diese Querbeschleunigung und daraus resultierend die insbesondere als Zentrifugalkraft ausgebildete Querkraft wird bei einem Durchfahren dieses als Kurve ausgebildeten Streckenabschnitts auf den Insassen einwirken, insbesondere aufgrund der Trägheit des Körpers des Insassen. Diese als Zentrifugalbeschleunigung ausgebildete Querbeschleunigung bzw. diese als Zentrifugalkraft ausgebildete Querkraft ist dabei entgegen einer Kurvenrichtung der Kurve ausgerichtet, d. h. wenn der Streckenabschnitt der dem Fahrzeug vorausliegenden Fahrstrecke, für welchen die nächste auf den Insassen einwirkende Querbeschleunigung prognostiziert wird, eine Rechtskurve ist, dann verläuft die Richtung dieser auf den Insassen einwirkenden Querbeschleunigung bzw. Querkraft nach links, und wenn der Streckenabschnitt der dem Fahrzeug vorausliegenden Fahrstrecke, für welchen die nächste auf den Insassen einwirkende Querbeschleunigung prognostiziert wird, eine Linkskurve ist, dann verläuft die Richtung dieser auf den Insassen einwirkenden Querbeschleunigung bzw. Querkraft nach rechts. Die als Zentrifugalkraft ausgebildete Querkraft ist das Produkt aus der als Zentrifugalbeschleunigung ausgebildeten Querbeschleunigung und einer Masse des Insassen. Die Prognose der Querbeschleunigung bzw. der Querkraft beruht insbesondere auf der ermittelten vorausliegenden Fahrstrecke und einer Geschwindigkeit des Fahrzeugs. Die hierfür verwendete Geschwindigkeit ist beispielsweise eine aktuelle Geschwindigkeit und/oder eine für die vorausliegende Fahrstrecke, insbesondere für einen die nächste Querbeschleunigung verursachenden Streckenabschnitt, prognostizierte oder vorgegebene Geschwindigkeit des Fahrzeugs. Die vorgegebene Geschwindigkeit ist beispielsweise eine auf diesem Streckenabschnitt vorgegebene Höchstgeschwindigkeit oder eine für einen automatisierten, insbesondere hochautomatisierten oder autonomen, Fahrbetrieb des Fahrzeugs vorgegebene Geschwindigkeit für diesen Streckenabschnitt. Alternativ oder zusätzlich kann die Geschwindigkeit und/oder die Höhe der Querbeschleunigung beispielsweise auf Erfahrungswerten und/oder gelernten Werten, somit insbesondere auf erfahrungsbasierten und personalisierten Analysen, beruhen und somit erfahrungs- und/oder lern basiert prognostiziert werden. Die Erfahrung und/oder die gelernten Informationen beruhen dabei beispielsweise auf vorher durchgeführten Fahrten, insbesondere mit demselben Insassen, und/oder auf einem vom Insassen bevorzugten Fahrstil. Beispielsweise wird künstliche Intelligenz verwendet, um den Insassen und dessen bevorzugten Fahrstil zu erkennen. Die Prognose der nächsten auf den Insassen einwirkenden Querbeschleunigung kann dann beispielsweise auf einer Verknüpfung einer aktuell vorliegenden Situation mit vergangenen, insbesondere gelernten, Szenarien beruhen. Die Querbeschleunigung wird, wie oben bereits erwähnt, insbesondere durch einen als eine Kurve ausgebildeten Streckenabschnitt verursacht, d. h. sie wird bei einem Durchfahren dieses als Kurve ausgebildeten Streckenabschnitts auf den Insassen einwirken.

Als Maßnahme zur Verringerung oder Vermeidung der Kinetose wird eine Karosserie und/oder ein vom Insassen besetzter Fahrzeugsitz des Fahrzeugs vor einem Eintritt der prognostizierten Querbeschleunigung in Richtung der prognostizierten Querbeschleunigung geschwenkt, insbesondere ruckartig oder schlagartig, wodurch der Insasse zur Durchführung einer Gegenbewegung des Oberkörpers oder zumindest des Kopfes veranlasst wird. D. h. diese insbesondere ruckartige oder schlagartige, Schwenkbewegung wird derart durchgeführt, dass der Insasse zur Durchführung der Gegenbewegung des Oberkörpers oder zumindest des Kopfes veranlasst wird. Die, insbesondere ruckartige oder schlagartige, Schwenkbewegung wird hierfür insbesondere derart stark durchgeführt, dass dadurch diese Gegenbewegung erzeugt wird, d. h. veranlasst wird. Die Gegenbewegung ist dann entgegen der Richtung der prognostizierten Querbeschleunigung gerichtet. Der Insasse wird somit dazu veranlasst, sich mit seinem Oberkörper oder zumindest mit seinem Kopf aktiv in die Kurve hineinzuneigen, auch als in die Kurve hineinlehnen oder hineinlegen bezeichnet.

Es ist insbesondere vorgesehen, dass dieses Schwenken der Karosserie und/oder des vom Insassen besetzten Fahrzeugsitzes in Richtung der prognostizierten Querbeschleunigung wenige hundert Millisekunden vor dem Eintritt der prognostizierten Querbeschleunigung durchgeführt wird, insbesondere eine Sekunde bis 200 Millisekunden vor dem Eintritt der prognostizierten Querbeschleunigung.

Erfindungsgemäß ist vorgesehen, dass als weitere Maßnahme zur Verringerung oder Vermeidung der Kinetose die Karosserie und/oder der vom Insassen besetzte Fahrzeugsitz danach zur Unterstützung der Gegenbewegung des Insassen entgegen der Richtung der prognostizierten Querbeschleunigung geschwenkt wird. Es wird somit das Hineinneigen des Oberkörpers oder zumindest des Kopfes des Insassen in die Kurve durch dieses Schwenken der Karosserie und/oder des vom Insassen besetzten Fahrzeugsitz entgegen der Richtung der prognostizierten Querbeschleunigung unterstützt. Dieses Schwenken der Karosserie und/oder des vom Insassen besetzten Fahrzeugsitzes entgegen der Richtung der prognostizierten Querbeschleunigung wird erfindungsgemäß synchron mit der Gegenbewegung des Insassen durchgeführt. Um dies sicherzustellen, ist erfindungsgemäß vorgesehen, dass die Gegenbewegung des Insassen ermittelt wird, beispielsweise mittels einer den Insassen und insbesondere dessen Bewegungen erfassende Kamera des Fahrzeugs und/oder mittels einer Insassenbewegungssensorik, beispielsweise im Fahrzeugsitz. Alternativ ist in einer nicht erfindungsgemäßen Ausführungsform beispielsweise eine Wartezeit vom Durchführen des Schwenkens der Karosserie und/oder des vom Insassen besetzten Fahrzeugsitzes in Richtung der prognostizierten Querbeschleunigung bis zum Durchführen des Schwenkens der Karosserie und/oder des vom Insassen besetzten Fahrzeugsitzes entgegen der Richtung der prognostizierten Querbeschleunigung vorgegeben. In diesem Fall wird somit das Schwenken der Karosserie und/oder des vom Insassen besetzten Fahrzeugsitzes entgegen der Richtung der prognostizierten Querbeschleunigung am Ende dieser Wartezeit, d. h. unmittelbar nach deren Ablauf, durchgeführt.

Ist der Streckenabschnitt der dem Fahrzeug vorausliegenden Fahrstrecke, für welchen die nächste auf den Insassen einwirkende Querbeschleunigung prognostiziert wird, eine Rechtskurve, dann verläuft die Richtung dieser auf den Insassen einwirkenden Querbeschleunigung, d. h. der auf den Insassen einwirkenden Zentrifugalbeschleunigung, nach links, insbesondere aufgrund der Trägheit des Körpers des Insassen. Die Karosserie und/oder der vom Insassen besetzte Fahrzeugsitz des Fahrzeugs wird dann vor dem Eintritt der prognostizierten Querbeschleunigung in Richtung der prognostizierten Querbeschleunigung und somit nach links geschwenkt, insbesondere ruckartig oder schlagartig, wodurch der Insasse zur Durchführung der Gegenbewegung des Oberkörpers oder zumindest des Kopfes veranlasst wird. Die Gegenbewegung verläuft somit nach rechts. Der Insasse neigt somit seinen Oberkörper oder zumindest seinen Kopf aktiv in die Kurve, hier in die Rechtskurve, hinein. Als weitere Maßnahme zur Verringerung oder Vermeidung der Kinetose ist dann vorgesehen, dass die Karosserie und/oder der vom Insassen besetzte Fahrzeugsitz zur Unterstützung der Gegenbewegung des Insassen entgegen der Richtung der prognostizierten Querbeschleunigung und somit nach rechts geschwenkt wird. Das Hineinneigen des Oberkörpers oder zumindest des Kopfes des Insassen in die Kurve wird somit durch dieses Schwenken der Karosserie und/oder des vom Insassen besetzten Fahrzeugsitzes unterstützt. Dieses Schwenken der Karosserie und/oder des vom Insassen besetzten Fahrzeugsitzes entgegen der Richtung der prognostizierten Querbeschleunigung wird synchron mit der Gegenbewegung des Insassen durchgeführt.

Ist der Streckenabschnitt der dem Fahrzeug vorausliegenden Fahrstrecke, für welchen die nächste auf den Insassen einwirkende Querbeschleunigung prognostiziert wird, eine Linkskurve, dann verläuft die Richtung dieser auf den Insassen einwirkenden Querbeschleunigung, d. h. der auf den Insassen einwirkenden Zentrifugalbeschleunigung, nach rechts, insbesondere aufgrund der Trägheit des Körpers des Insassen. Die Karosserie und/oder der vom Insassen besetzte Fahrzeugsitz des Fahrzeugs wird dann vor dem Eintritt der prognostizierten Querbeschleunigung in Richtung der prognostizierten Querbeschleunigung und somit nach rechts geschwenkt, insbesondere ruckartig oder schlagartig, wodurch der Insasse zur Durchführung der Gegenbewegung des Oberkörpers oder zumindest des Kopfes veranlasst wird. Die Gegenbewegung verläuft somit nach links. Der Insasse neigt somit seinen Oberkörper oder zumindest seinen Kopf aktiv in die Kurve, hier in die Linkskurve, hinein. Als weitere Maßnahme zur Verringerung oder Vermeidung der Kinetose ist dann vorgesehen, dass die Karosserie und/oder der vom Insassen besetzte Fahrzeugsitz zur Unterstützung der Gegenbewegung des Insassen entgegen der Richtung der prognostizierten Querbeschleunigung und somit nach links geschwenkt wird. Das Hineinneigen des Oberkörpers oder zumindest des Kopfes des Insassen in die Kurve wird somit durch dieses Schwenken der Karosserie und/oder des vom Insassen besetzten Fahrzeugsitzes unterstützt. Dieses Schwenken der Karosserie und/oder des vom Insassen besetzten Fahrzeugsitzes entgegen der Richtung der prognostizierten Querbeschleunigung wird synchron mit der Gegenbewegung des Insassen durchgeführt.

Das beschriebene Schwenken der Karosserie wird insbesondere mittels eines Fahrwerks des Fahrzeugs durchgeführt, insbesondere durch eine entsprechende Aktorik des Fahrzeugs. Das beschriebene Schwenken des Fahrzeugsitzes wird insbesondere durch eine entsprechende Schwenkaktorik durchgeführt, mittels welcher der Fahrzeugsitz auf die beschriebene Weise relativ zur Karosserie geschwenkt wird.

In dem beschriebenen Verfahren, welches insbesondere vollständig und insbesondere automatisch vom Fahrzeug oder von mindestens einer Einrichtung des Fahrzeugs durchgeführt wird, wird somit insbesondere eine fahrdynamisch prädiktive Ruck-Regelung bei bevorstehender Querdynamik zur Vermeidung von Kinetose bei dem Insassen des Fahrzeugs durchgeführt.

Kinetose, auch bekannt als Motion Sickness oder Reisekrankheit, ist eine natürliche physiologische Reaktion des menschlichen Organismus und ist charakterisiert durch die Kardinalsymptome Lethargie, Schweißausbrüche, Kopfschmerzen und Übelkeit. Müdigkeits-, Aufmerksamkeits- und Konzentrationsprobleme können als nachgelagerte Effekte auftreten und bis zu mehreren Stunden bis Tagen andauern. Dies kann eine Fahrtüchtigkeit bzw. Fähigkeit zur Übernahme der Fahrzeugführung bei einem Abbruch eines automatisierten, insbesondere hochautomatisierten oder autonomen, Fahrbetriebs des Fahrzeugs stark beeinflussen und ein sicherheitskritisches Problem darstellen.

Kinetose tritt insbesondere dann auf, wenn der menschliche Körper sensorische, insbesondere visuelle, vestibuläre und somatosensorische, Bewegungsreize erfasst und diese nicht mit im neuronalen Speicher hinterlegten Bewegungsmustern aus der Vergangenheit übereinstimmen. Insbesondere mit steigender Fahrzeugautomation und der damit verbundenen Möglichkeit auch für einen Fahrzeugführer, während des automatisierten, insbesondere hochautomatisierten oder autonomen, Fahrbetriebs, insbesondere visuell-beanspruchenden, Nebentätigkeiten nachzugehen, ist mit einer signifikant höheren Prävalenz von Kinetose zu rechnen.

Durch das beschriebene Verfahren wird zur Verringerung oder Vermeidung der Kinetose insbesondere eine Haltungsstabilität des Insassen erhöht, insbesondere bei fehlender Vorausschau des Insassen, d. h. insbesondere wenn eine Blickrichtung des Insassen nicht durch Fahrzeugfenster hindurch in eine äußere Fahrzeugumgebung gerichtet ist, beispielsweise beim Lesen. Dazu wird im beschriebenen Verfahren, insbesondere, wie oben beschrieben, wenige Hundert Millisekunden vor Eintritt der prognostizierten Querbeschleunigung, auf die oben beschriebene Weise ein rotarischer Ruck entlang der Fahrzeuglängsachse oder entlang einer Parallelen zur Fahrzeuglängsachse durch das Fahrwerk und/oder den Fahrzeugsitz induziert, indem mittels des Fahrwerks die Karosserie auf die oben beschriebene Weise geschwenkt wird und/oder der Fahrzeugsitz auf die oben beschriebene Weise geschwenkt wird. Es wird somit eine auf den Insassen einwirkende Wankbewegung der Karosserie oder zumindest des Fahrzeugsitzes durchgeführt. Diese induzierte Bewegung folgt der prognostizierten und somit künftig auftretenden Querbeschleunigung, d. h. sie ist, wie oben beschrieben, in deren Richtung ausgerichtet. Sie induziert dadurch die Gegenbewegung des Oberkörpers oder zumindest des Kopfes des Insassen. Der Ruck, d. h. die ruckartige oder schlagartige Schwenkbewegung, wird entsprechend stark ausgeführt, um die Gegenbewegung zu erzeugen. Vorteilhafterweise wird dann diese reflektorische Gegenbewegung durch die Karosserie und/oder den Fahrzeugsitz, d. h. durch das beschriebene anschließende Schwenken entgegen der Richtung der prognostizierten Querbeschleunigung, unterstützt, wobei dies insbesondere synchron mit der Gegenbewegung des Insassen erfolgt.

In einer möglichen Ausführungsform des Verfahrens ist vorgesehen, dass als weitere Maßnahme zur Verringerung oder Vermeidung der Kinetose eine akustische, visuelle und/oder taktile Informationsausgabe an den Insassen durchgeführt wird. Dabei ist in einer möglichen Ausführungsform des Verfahrens vorgesehen, dass eine Intensität der Informationsausgabe in Abhängigkeit von einer Höhe der prognostizierten Querbeschleunigung vorgegeben wird. Es können somit ergänzend akustische, visuelle sowie taktile Informationen der Verringerung oder Vermeidung der Kinetose dienen, insbesondere um dem Insassen einen Informationsgehalt der künftigen Querbewegung und somit Querbeschleunigung zu verdeutlichen. Dabei sind insbesondere intensitätsregulatorische Informationen von Interesse. Dies bedeutet, dass größere Querbeschleunigungen auch lautere akustische Signale und/oder leuchtintensivere Farben bzw. Helligkeiten hervorrufen. Die Intensität der Informationsausgabe wird somit in Abhängigkeit von der Höhe der prognostizierten Querbeschleunigung vorgegeben, indem beispielsweise eine Lautstärke der akustischen Informationsausgabe und/oder eine Farbintensität und/oder Helligkeit der visuellen Informationsausgabe an die Höhe der prognostizierten Querbeschleunigung angepasst wird.

In einer möglichen Ausführungsform des Verfahrens ist vorgesehen, dass die mehreren Maßnahmen zur Verringerung oder Vermeidung der Kinetose nur dann vorgenommen werden, wenn ein Vorliegen mindestens eines vorgegebenen Kinetosekriteriums oder mehrerer vorgegebener Kinetosekriterien ermittelt wird. Kinetosekriterien sind dabei insbesondere Kriterien, die ein Vorliegen einer kinetosekritischen Situation anzeigen, d. h. bei deren Vorliegen eine Gefahr des Auftretens der Kinetose gegeben ist oder erhöht ist.

Beispielsweise werden die mehreren Maßnahmen zur Verringerung oder Vermeidung der Kinetose nur dann vorgenommen, wenn
- die prognostizierte Querbeschleunigung einen vorgegebenen Querbeschleunigungsschwellwert überschreitet, und/oder
- der Insasse eine Kinetose-Suszeptibilität aufweist, und/oder
- eine aktuelle Fahrdauer einen vorgegebenen Fahrdauerschwellwert überschreitet, und/oder
- der Insasse eine vom Fahrbetrieb des Fahrzeugs unabhängige Nebentätigkeit ausführt, und/oder
- die Blickrichtung des Insassen nach unten ausgerichtet ist und/oder von Fahrzeugfenstern des Fahrzeugs abgewandt ist und/oder auf ein die Nebentätigkeit betreffendes Objekt ausgerichtet ist, und/oder
- eine Innentemperatur des Fahrzeugs einen vorgegebenen Innentemperaturschwellwert überschreitet, und/oder
- ein Unwohlsein des Insassen, d. h. ein mangelndes Wohlbefinden des Insassen, ermittelt wird.

Insbesondere ist vorgesehen, dass die mehreren Maßnahmen zur Verringerung oder Vermeidung der Kinetose nur dann vorgenommen wird/werden, wenn die prognostizierte Querbeschleunigung den vorgegebenen Querbeschleunigungsschwellwert überschreitet und zusätzlich das Vorliegen mindestens eines weiteren vorgegebenen Kinetosekriteriums oder mehrerer weiterer vorgegebener Kinetosekriterien ermittelt wird, beispielsweise dass
- der Insasse die Kinetose-Suszeptibilität aufweist, und/oder
- die aktuelle Fahrdauer den vorgegebenen Fahrdauerschwellwert überschreitet, und/oder
- der Insasse die vom Fahrbetrieb des Fahrzeugs unabhängige Nebentätigkeit ausführt, und/oder
- die Blickrichtung des Insassen nach unten ausgerichtet ist und/oder von den Fahrzeugfenstern des Fahrzeugs abgewandt ist und/oder auf das die Nebentätigkeit betreffende Objekt ausgerichtet ist, und/oder
- die Innentemperatur des Fahrzeugs den vorgegebenen Innentemperaturschwellwert überschreitet, und/oder
- das Unwohlsein des Insassen, d. h. das mangelnde Wohlbefinden des Insassen, ermittelt wird.

Die Kinetose-Suszeptibilität des Insassen, d. h. wie empfindlich oder anfällig der Insasse hinsichtlich des Auftretens von Kinetose ist, kann beispielsweise durch eine Information des Insassen an das Fahrzeug übermittelt werden, zum Beispiel durch eine Spracheingabe oder eine schriftliche Eingabe dieser Information durch den Insassen, oder sie kann beispielsweise durch vom Fahrzeug, insbesondere mittels einer Insassensensorik, ermittelte und gespeicherte Informationen aus vorherigen Fahrten des Insassen mit dem Fahrzeug ermittelt werden.

Die aktuelle Fahrdauer wird beispielsweise durch eine Fahrzeitzähler des Fahrzeugs oder auf andere Weise ermittelt.

Die vom Fahrbetrieb unabhängige Nebentätigkeit ist insbesondere eine Tätigkeit, die nicht zur Durchführung des Fahrbetriebs erforderlich ist und nicht mit dem Fahrbetrieb zusammenhängt. Eine solche Nebentätigkeit ist beispielsweise Lesen, beispielsweise Lesen eines Buches oder einer Zeitung, oder Spielen, beispielsweise Computerspielen, oder das Ansehen eines Videos oder Fernsehprogramms. Ob der Insasse eine solche Nebentätigkeit ausführt, kann beispielsweise mittels der Insassensensorik des Fahrzeugs ermittelt werden, insbesondere mittels einer Kamera.

Die Blickrichtung des Insassen kann beispielsweise mittels der Insassensensorik des Fahrzeugs ermittelt werden, insbesondere mittels einer Kamera.

Die Innentemperatur wird beispielsweise mittels eines Innenraumtemperatursensors des Fahrzeugs ermittelt.

Das Wohlbefinden und somit auch das mangelnde Wohlbefinden, d. h. das Unwohlsein, des Insassen kann beispielsweise mittels der Insassensensorik des Fahrzeugs ermittelt werden, beispielsweise mittels der Kamera und/oder mittels einer Sensorik zur Ermittlung von Vitalparametern des Insassen.

Ist der Insasse ein Fahrzeugführer des Fahrzeugs, dann wird für diesen Insassen das Verfahren insbesondere oder ausschließlich während eines automatisierten, insbesondere hochautomatisierten oder autonomen, Fahrbetriebs des Fahrzeugs durchgeführt. Der Fahrzeugführer ist dabei derjenige Insasse des Fahrzeugs, der bei einem Abbruch dieses automatisierten Fahrbetriebs die Kontrolle über das Fahrzeug übernehmen muss, insbesondere das Fahrzeug aktiv führen muss.

Ist der Insasse kein Fahrzeugführer des Fahrzeugs, so kann das Verfahren für diesen Insassen während des automatisierten, insbesondere hochautomatisierten oder autonomen, Fahrbetriebs des Fahrzeugs und/oder in anderen Fahrbetriebssituationen, insbesondere auch während eines von einem Fahrzeugführer aktiv durchgeführten Fahrbetriebs des Fahrzeugs durchgeführt werden.

Das beschriebene Verfahren kann auch für mehrere Insassen des Fahrzeugs durchgeführt werden. Insbesondere wenn die jeweilige Schwenkbewegung durch den Fahrzeugsitz des jeweiligen Insassen erfolgt, kann das Verfahren dabei individuell für den jeweiligen Insassen durchgeführt werden, insbesondere in Abhängigkeit von dem Vorliegen des mindestens einen oder jeweiligen Kinetosekriteriums bezüglich des jeweiligen Insassen. Dabei können sich insbesondere das Vorliegen der Kinetose-Suszeptibilität, das Ausführen der vom Fahrbetrieb unabhängigen Nebentätigkeit, die Blickrichtung und das Wohlbefinden, d. h. das Vorliegen oder Nichtvorliegen des Unwohlseins, bei den Insassen unterscheiden, so dass das Verfahren dann beispielsweise nur bei einem der Insassen oder nur bei einigen der mehreren Insassen durchgeführt wird.

Im Vergleich zu bestehenden technischen Lösungen, die darauf abzielen, die Querdynamik zu kompensieren, beispielsweise indem das Fahrzeug mittels Neigetechnik während des Durchfahrens der Kurve und somit erst bei Eintritt der Querbeschleunigung in die Kurve hineingeneigt wird, liegt der Schwerpunkt bei der hier beschriebenen Lösung darin begründet, prädiktiv Impulse zu setzen und somit eine Eigenbewegung des Insassen entgegen der Zentrifugalkraft zu induzieren. Wichtig dabei ist die Aktivierung des menschlichen Bewegungsapparates und nicht die passive Führung des Menschen zur Kompensation der auftretenden Querkraft. Es hat sich gezeigt, dass lediglich aktive Bewegungen zu einer Verringerung von Kinetose führen. Die beschriebene Lösung liegt insbesondere in der Provokation reflektorischer Körperbewegungen. Die Stimulation kann somit nicht - ohne willentliche Unterdrückung - ignoriert werden, sondern führt zu einer unmittelbaren Muskelaktivität und stimuliert dabei unter anderem zum Beispiel den vestibulo-spinalen Reflex und/oder den vestibulo-collic Reflex und/oder den cervicocollic Reflex. Diese Stimulation ist besonders vorteilhaft zur Verringerung oder Vermeidung von Kinetose.

Ausführungsbeispiele der Erfindung werden im Folgenden anhand einer Zeichnung näher erläutert.

Dabei zeigt:

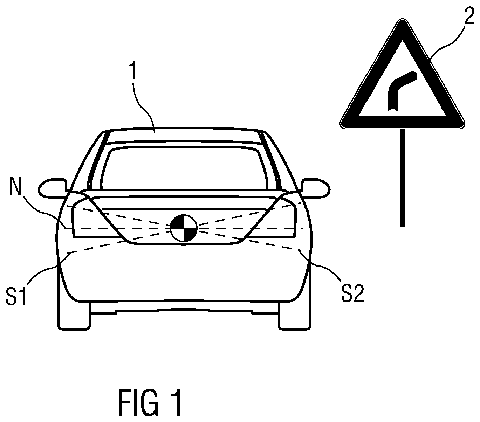

- Fig. 1: schematisch ein Ausführungsbeispiel eines Verfahrens zur Verringerung oder Vermeidung von Kinetose bei einem Insassen im Fahrbetrieb eines Fahrzeugs.

Figur 1 zeigt eine beispielhafte Verkehrssituation während eines Fahrbetriebs eines Fahrzeugs 1 und ein dabei durchgeführtes Verfahren zur Verringerung oder Vermeidung von Kinetose bei einem Insassen dieses Fahrzeugs 1. Bestandteil bzw. benötigte Eingangsgröße der beschriebenen technischen Lösung ist insbesondere eine Vorhersage einer künftigen Trajektorie des Fahrzeugs 1, d. h. insbesondere einer dem Fahrzeug 1 vorausliegenden Fahrstrecke, und eine damit verbundene Beschreibung einer zukünftig auftretenden Querbeschleunigung, insbesondere Zentrifugalbeschleunigung, des Insassen des Fahrzeugs 1.

In dem im Folgenden beschriebenen Verfahren ist insbesondere vorgesehen, dass bei Überschreiten eines vorgegebenen Querbeschleunigungsschwellwertes und einem zusätzlichen Sensieren weiterer Kriterien einer kinetose-kritischen Situation die im Folgenden beschriebenen Maßnahmen zur Verringerung oder Vermeidung der Kinetose durchgeführt werden. Kinetoserelevante Kriterien sind unter anderem beispielsweise eine individuelle Kinetose-Suszeptibilität des Insassen, eine Fahrdauer, eine Nebentätigkeit des Insassen, eine Innentemperatur des Fahrzeugs 1 sowie ein aktuelles Wohlbefinden des Insassen. Kinetose-kritische Situationen liegen beispielsweise vor, wenn der Insasse seinen Blick nach unten richtet, um beispielsweise ein Buch zu lesen oder einer anderen Nebentätigkeit nachzugehen.

In dem hier beschriebenen Verfahren zur Verringerung oder Vermeidung von Kinetose bei einem Insassen im Fahrbetrieb des Fahrzeugs 1 wird somit ein Verlauf der dem Fahrzeug 1 vorausliegenden Fahrstrecke ermittelt, beispielsweise anhand einer digitalen Straßenkarte und einer, beispielsweise mittels eines globalen Navigationssatellitensystems, ermittelten aktuellen Position des Fahrzeugs 1 und/oder mittels einer Umgebungserfassungssensorik des Fahrzeugs 1. Mittels der Umgebungserfassungssensorik kann der Verlauf der dem Fahrzeug 1 vorausliegenden Fahrstrecke beispielsweise durch Erfassen der Fahrstrecke und/oder von Streckenbegrenzungen der Fahrstrecke und/oder durch Erfassen mindestens eines den Verlauf der dem Fahrzeug 1 vorausliegenden Fahrstrecke anzeigenden Verkehrszeichens 2 oder Hinweisschildes ermittelt werden. Im dargestellten Beispiel ist ein solches Verkehrszeichen 2 vorhanden, welches eine dem Fahrzeug 1 vorausliegende scharfe Rechtskurve anzeigt.

Anhand des ermittelten Verlaufs der dem Fahrzeug 1 vorausliegenden Fahrstrecke und beispielsweise zusätzlich weiterer, insbesondere erfahrungsbasierter, Parameter der Fahrdynamik wird eine nächste auf den Insassen einwirkende Querbeschleunigung prognostiziert. Diese auf den Insassen einwirkende Querbeschleunigung ist, insbesondere bezüglich ihrer Richtung, die Zentrifugalbeschleunigung, die auf den Insassen, insbesondere aufgrund der Trägheit seines Körpers, einwirkt, während das Fahrzeug 1 die Kurve durchfährt. Die Prognose der Querbeschleunigung beruht insbesondere auf der ermittelten vorausliegenden Fahrstrecke und einer Geschwindigkeit des Fahrzeugs 1. Die hierfür verwendete Geschwindigkeit ist beispielsweise eine aktuelle Geschwindigkeit und/oder eine für die vorausliegende Fahrstrecke, insbesondere für einen die nächste Querbeschleunigung verursachenden Streckenabschnitt, prognostizierte oder vorgegebene Geschwindigkeit des Fahrzeugs 1. Die vorgegebene Geschwindigkeit ist beispielsweise eine auf diesem Streckenabschnitt vorgegebene Höchstgeschwindigkeit oder eine für einen automatisierten, insbesondere hochautomatisierten oder autonomen, Fahrbetrieb des Fahrzeugs 1 vorgegebene Geschwindigkeit für diesen Streckenabschnitt. Im dargestellten Beispiel ist dieser Streckenabschnitt die Rechtskurve. Die Geschwindigkeit des Fahrzeugs 1 ist somit die zum Durchfahren dieser Rechtskurve prognostizierte oder vorgegebene Geschwindigkeit oder dient der Ermittlung der zum Durchfahren dieser Rechtskurve prognostizierten oder vorgegebenen Geschwindigkeit.

Als Maßnahme zur Verringerung oder Vermeidung der Kinetose wird, wie in Figur 1 dargestellt, eine Karosserie des Fahrzeugs 1 oder alternativ oder zusätzlich ein vom Insassen besetzter Fahrzeugsitz des Fahrzeugs 1 vor einem Eintritt der prognostizierten Querbeschleunigung in Richtung der prognostizierten Querbeschleunigung geschwenkt, insbesondere ruckartig oder schlagartig, wodurch der Insasse zur Durchführung einer Gegenbewegung des Oberkörpers oder zumindest des Kopfes veranlasst wird. Dieses Schwenken wird in Figur 1 schematisch durch eine erste Schwenklinie S1 verdeutlicht, welche eine Ausrichtung der relativ zu einer Normallage, d. h. insbesondere zu einer horizontalen Ausrichtung, des Fahrzeugs 1 um eine Fahrzeuglängsachse oder um eine Parallele zur Fahrzeuglängsachse geschwenkten Karosserie des Fahrzeugs 1 verdeutlicht. Dabei wird die Normallage des Fahrzeugs 1 durch eine Normallagenlinie N dargestellt, die einer Ausrichtung einer Fahrzeugquerachse des Fahrzeugs 1 in der Normallage entspricht. Die erste Schwenklinie S1 entspricht einer Ausrichtung der Fahrzeugquerachse des Fahrzeugs 1 nach dem Schwenken der Karosserie in Richtung der prognostizierten Querbeschleunigung.

Die, insbesondere ruckartige oder schlagartige, Schwenkbewegung wird hierfür derart stark durchgeführt, dass dadurch diese Gegenbewegung erzeugt wird, d. h. veranlasst wird. Es ist insbesondere vorgesehen, dass dieses Schwenken der Karosserie und/oder des vom Insassen besetzten Fahrzeugsitzes in Richtung der prognostizierten Querbeschleunigung wenige hundert Millisekunden, beispielsweise eine Sekunde bis 200 Millisekunden, vor dem Eintritt der prognostizierten Querbeschleunigung durchgeführt wird.

Des Weiteren ist vorgesehen, dass danach als weitere Maßnahme zur Verringerung oder Vermeidung der Kinetose im dargestellten Beispiel die Karosserie oder alternativ oder zusätzlich der vom Insassen besetzte Fahrzeugsitz zur Unterstützung der Gegenbewegung des Insassen entgegen der Richtung der prognostizierten Querbeschleunigung geschwenkt wird. Dieses Schwenken wird in Figur 1 schematisch durch eine zweite Schwenklinie S2 verdeutlicht, welche eine Ausrichtung der relativ zur Normallage um die Fahrzeuglängsachse oder um die Parallele zur Fahrzeuglängsachse geschwenkten Karosserie des Fahrzeugs 1 verdeutlicht. Die zweite Schwenklinie S2 entspricht einer Ausrichtung der Fahrzeugquerachse des Fahrzeugs 1 nach dem Schwenken der Karosserie entgegen der Richtung der prognostizierten Querbeschleunigung. Dieses Schwenken der Karosserie und/oder des vom Insassen besetzten Fahrzeugsitzes entgegen der Richtung der prognostizierten Querbeschleunigung wird synchron mit der Gegenbewegung des Insassen durchgeführt. Beispielsweise kompensiert sie mindestens die aufgrund der Querbeschleunigung auftretenden Radlastdifferenzen inklusive der damit verbundenen Einfederung (Wankbewegung), sodass die Normallage des Fahrzeugs 1, d. h. die Normallagenlinie N, mindestens erreicht wird.

Ist der Streckenabschnitt der dem Fahrzeug 1 vorausliegenden Fahrstrecke, für welchen die nächste auf den Insassen einwirkende Querbeschleunigung prognostiziert wird, eine Rechtskurve, wie im Beispiel gemäß Figur 1, dann verläuft die Richtung dieser auf den Insassen einwirkenden Querbeschleunigung nach links. Die Karosserie und/oder der vom Insassen besetzte Fahrzeugsitz des Fahrzeugs 1 wird dann vor dem Eintritt der prognostizierten Querbeschleunigung in Richtung der prognostizierten Querbeschleunigung und somit nach links geschwenkt, insbesondere ruckartig oder schlagartig, wodurch der Insasse zur Durchführung der Gegenbewegung des Oberkörpers oder zumindest des Kopfes veranlasst wird. Die Gegenbewegung verläuft somit nach rechts, also in das Kurveninnere. Als weitere Maßnahme zur Verringerung oder Vermeidung der Kinetose ist dann vorgesehen, dass die Karosserie und/oder der vom Insassen besetzte Fahrzeugsitz zur Unterstützung der Gegenbewegung des Insassen entgegen der Richtung der prognostizierten Querbeschleunigung und somit nach rechts geschwenkt wird. Dieses Schwenken der Karosserie und/oder des vom Insassen besetzten Fahrzeugsitzes entgegen der Richtung der prognostizierten Querbeschleunigung wird synchron mit der Gegenbewegung des Insassen durchgeführt.

Wenn der Streckenabschnitt der dem Fahrzeug 1 vorausliegenden Fahrstrecke, für welchen die nächste auf den Insassen einwirkende Querbeschleunigung prognostiziert wird, eine hier nicht dargestellte Linkskurve ist, dann erfolgen die beschriebenen Bewegungen, insbesondere Schwenkbewegungen, entsprechend in entgegengesetzter Richtung.

Das beschriebene Schwenken der Karosserie wird insbesondere mittels eines Fahrwerks des Fahrzeugs 1 durchgeführt, insbesondere durch eine entsprechende Aktorik des Fahrzeugs 1. Das beschriebene Schwenken des Fahrzeugsitzes wird insbesondere durch eine entsprechende Schwenkaktorik durchgeführt, mittels welcher der Fahrzeugsitz auf die beschriebene Weise relativ zur Karosserie geschwenkt wird.

Durch das beschriebene Verfahren wird zur Verringerung oder Vermeidung der Kinetose insbesondere eine Haltungsstabilität des Insassen erhöht, insbesondere bei fehlender Vorausschau des Insassen, d. h. insbesondere wenn eine Blickrichtung des Insassen nicht durch Fahrzeugfenster hindurch in eine äußere Fahrzeugumgebung gerichtet ist, beispielsweise beim Lesen. Dazu wird im beschriebenen Verfahren, insbesondere, wie oben beschrieben, wenige Hundert Millisekunden vor Eintritt der prognostizierten Querbeschleunigung, auf die oben beschriebene Weise ein rotarischer Ruck entlang der Fahrzeuglängsachse oder entlang einer Parallelen zur Fahrzeuglängsachse durch das Fahrwerk und/oder den Fahrzeugsitz induziert, indem mittels des Fahrwerks die Karosserie auf die oben beschriebene Weise geschwenkt wird und/oder der Fahrzeugsitz auf die oben beschriebene Weise geschwenkt wird. Es wird somit eine auf den Insassen einwirkende Wankbewegung der Karosserie oder zumindest des Fahrzeugsitzes durchgeführt. Diese induzierte Bewegung folgt der prognostizierten und somit künftig auftretenden Querbeschleunigung, d. h. sie ist, wie oben beschrieben, in deren Richtung ausgerichtet. Sie induziert dadurch die Gegenbewegung des Oberkörpers oder zumindest des Kopfes des Insassen. Der Ruck wird entsprechend stark ausgeführt, um die Gegenbewegung zu erzeugen. Diese reflektorische Gegenbewegung wird dann durch die Karosserie und/oder den Fahrzeugsitz, d. h. durch das beschriebene anschließende Schwenken entgegen der Richtung der prognostizierten Querbeschleunigung, unterstützt, wobei dies synchron mit der Gegenbewegung des Insassen erfolgt.

Es ist insbesondere vorgesehen, dass als weitere Maßnahme zur Verringerung oder Vermeidung der Kinetose eine akustische, visuelle und/oder taktile Informationsausgabe an den Insassen durchgeführt wird. Dabei ist in einer möglichen Ausführungsform des Verfahrens vorgesehen, dass eine Intensität der Informationsausgabe in Abhängigkeit von einer Höhe der prognostizierten Querbeschleunigung vorgegeben wird. Es können somit ergänzend akustische, visuelle sowie taktile Informationen der Verringerung oder Vermeidung der Kinetose dienen, insbesondere um dem Insassen einen Informationsgehalt der künftigen Querbewegung und somit Querbeschleunigung zu verdeutlichen. Dabei sind insbesondere intensitätsregulatorische Informationen von Interesse. Dies bedeutet, dass größere Querbeschleunigungen auch lautere akustische Signale und/oder leuchtintensivere Farben bzw. Helligkeiten hervorrufen.

Es ist insbesondere vorgesehen, dass die Maßnahmen zur Verringerung oder Vermeidung der Kinetose nur dann vorgenommen wird/werden, wenn ein Vorliegen vorgegebener Kinetosekriterien ermittelt wird. Insbesondere ist vorgesehen, dass die Maßnahmen zur Verringerung oder Vermeidung der Kinetose nur dann vorgenommen werden, wenn die prognostizierte Querbeschleunigung den vorgegebenen Querbeschleunigungsschwellwert überschreitet und zusätzlich das Vorliegen mindestens eines weiteren vorgegebenen Kinetosekriteriums oder mehrerer weiterer vorgegebener Kinetosekriterien ermittelt wird, beispielsweise dass
- der Insasse die Kinetose-Suszeptibilität aufweist, und/oder
- die aktuelle Fahrdauer den vorgegebenen Fahrdauerschwellwert überschreitet, und/oder
- der Insasse die vom Fahrbetrieb des Fahrzeugs 1 unabhängige Nebentätigkeit ausführt, und/oder
- die Blickrichtung des Insassen nach unten ausgerichtet ist und/oder von den Fahrzeugfenstern des Fahrzeugs 1 abgewandt ist und/oder auf das die Nebentätigkeit betreffende Objekt ausgerichtet ist, und/oder
- die Innentemperatur des Fahrzeugs 1 den vorgegebenen Innentemperaturschwellwert überschreitet, und/oder
- das Unwohlsein des Insassen, d. h. das mangelnde Wohlbefinden des Insassen, ermittelt wird.

## Patentansprüche

1. Verfahren zur Verringerung oder Vermeidung von Kinetose bei einem Insassen im Fahrbetrieb eines Fahrzeugs (1), wobei ein Verlauf einer dem Fahrzeug (1) vorausliegenden Fahrstrecke ermittelt wird,
wobei
anhand des ermittelten Verlaufs der dem Fahrzeug (1) vorausliegenden Fahrstrecke eine nächste auf den Insassen einwirkende Querbeschleunigung prognostiziert wird und als Maßnahme zur Verringerung oder Vermeidung der Kinetose eine Karosserie und/oder ein vom Insassen besetzter Fahrzeugsitz des Fahrzeugs (1) vor einem Eintritt der prognostizierten Querbeschleunigung in Richtung der prognostizierten Querbeschleunigung geschwenkt wird, wodurch der Insasse zur Durchführung einer Gegenbewegung des Oberkörpers oder zumindest des Kopfes veranlasst wird, wobei als weitere Maßnahme zur Verringerung oder Vermeidung der Kinetose die Karosserie und/oder der vom Insassen besetzte Fahrzeugsitz danach zur Unterstützung der Gegenbewegung des Insassen entgegen der Richtung der prognostizierten Querbeschleunigung geschwenkt wird, wobei die Gegenbewegung des Insassen ermittelt wird und das Schwenken der Karosserie und/oder des vom Insassen besetzten Fahrzeugsitzes entgegen der Richtung der prognostizierten Querbeschleunigung synchron mit der Gegenbewegung des Insassen durchgeführt wird.

2. Verfahren nach Anspruch 1,
**dadurch gekennzeichnet, dass**
das Schwenken der Karosserie und/oder des vom Insassen besetzten Fahrzeugsitzes in Richtung der prognostizierten Querbeschleunigung wenige hundert Millisekunden vor dem Eintritt der prognostizierten Querbeschleunigung durchgeführt wird, insbesondere eine Sekunde bis 200 Millisekunden vor dem Eintritt der prognostizierten Querbeschleunigung.

3. Verfahren nach einem der vorhergehenden Ansprüche
**dadurch gekennzeichnet, dass**
als weitere Maßnahme zur Verringerung oder Vermeidung der Kinetose eine akustische, visuelle und/oder taktile Informationsausgabe an den Insassen durchgeführt wird.

4. Verfahren nach Anspruch 3,
**dadurch gekennzeichnet, dass**
eine Intensität der Informationsausgabe in Abhängigkeit von einer Höhe der prognostizierten Querbeschleunigung vorgegeben wird.

5. Verfahren nach einem der vorhergehenden Ansprüche,
**dadurch gekennzeichnet, dass**
die mehreren Maßnahmen zur Verringerung oder Vermeidung der Kinetose nur dann vorgenommen werden, wenn ein Vorliegen mindestens eines vorgegebenen Kinetosekriteriums ermittelt wird.

6. Verfahren nach Anspruch 5,
**dadurch gekennzeichnet, dass**
die mehreren Maßnahmen zur Verringerung oder Vermeidung der Kinetose nur dann vorgenommen werden, wenn die prognostizierte Querbeschleunigung einen vorgegebenen Querbeschleunigungsschwellwert überschreitet und zusätzlich das Vorliegen mindestens eines weiteren vorgegebenen Kinetosekriteriums ermittelt wird.

7. Verfahren nach Anspruch 6,
**dadurch gekennzeichnet, dass**
als weiteres Kinetosekriterium berücksichtigt wird, dass
- der Insasse eine Kinetose-Suszeptibilität aufweist, und/oder
- eine aktuelle Fahrdauer einen vorgegebenen Fahrdauerschwellwert überschreitet, und/oder
- der Insasse eine vom Fahrbetrieb des Fahrzeugs (1) unabhängige Nebentätigkeit ausführt, und/oder
- eine Blickrichtung des Insassen nach unten ausgerichtet ist und/oder von Fahrzeugfenstern des Fahrzeugs (1) abgewandt ist und/oder auf ein die Nebentätigkeit betreffendes Objekt ausgerichtet ist, und/oder
- eine Innentemperatur des Fahrzeugs (1) einen vorgegebenen Innentemperaturschwellwert überschreitet, und/oder
- ein Unwohlsein des Insassen ermittelt wird.

## Claims

1. Method for reducing or preventing motion sickness in an occupant during a driving operation of a vehicle (1), wherein a course of a driving route ahead of the vehicle (1) is ascertained, wherein
a next lateral acceleration acting on the occupant is predicted based on the ascertained course of the driving route ahead of the vehicle (1) and, as a measure to reduce or prevent motion sickness, an automotive body and/or a vehicle seat of the vehicle (1), which vehicle seat is occupied by the occupant, is pivoted in the direction of the predicted lateral acceleration before the predicted lateral acceleration occurs, as a result of which pivoting, the occupant is caused to perform a countermovement of the upper body or at least of the head, wherein, as a further measure to reduce or prevent motion sickness, the automotive body and/or the vehicle seat occupied by the occupant is then pivoted counter to the direction of the predicted lateral acceleration to support the countermovement of the occupant, wherein the countermovement of the occupant is ascertained and the pivoting of the automotive body and/or of the vehicle seat occupied by the occupant counter to the direction of the predicted lateral acceleration is carried out synchronously with the countermovement of the occupant.

2. Method according to claim 1,
**characterized in that**
the pivoting of the automotive body and/or of the vehicle seat occupied by the occupant in the direction of the predicted lateral acceleration is carried out a few hundred milliseconds before the occurrence of the predicted lateral acceleration, in particular one second to 200 milliseconds before the occurrence of the predicted lateral acceleration.

3. Method according to either of the preceding claims
**characterized in that**
as a further measure to reduce or prevent motion sickness, an acoustic, visual and/or tactile information output is provided to the occupant.

4. Method according to claim 3,
**characterized in that**
an intensity of the information output is specified depending on an amount of the predicted lateral acceleration.

5. Method according to any of the preceding claims,
**characterized in that**
the plurality of measures to reduce or prevent motion sickness are only taken if a presence of at least one specified motion sickness criterion is ascertained.

6. Method according to claim 5,
**characterized in that**
the plurality of measures to reduce or prevent motion sickness are only taken if the predicted lateral acceleration exceeds a specified lateral acceleration threshold value and, in addition, the presence of at least one further specified motion sickness criterion is ascertained.

7. Method according to claim 6,
**characterized in that**
as a further motion sickness criterion it is taken into account that
- the occupant has a susceptibility to motion sickness, and/or
- a current driving duration exceeds a specified driving duration threshold value, and/or
- the occupant performs an ancillary activity independent of the driving operation of the vehicle (1), and/or
- a line of vision of the occupant is oriented downward and/or faces away from vehicle windows of the vehicle (1) and/or is orientated toward an object concerning the ancillary activity, and/or
- an interior temperature of the vehicle (1) exceeds a specified interior temperature threshold value, and/or
- a discomfort of the occupant is ascertained.

## Revendications

1. Procédé permettant de réduire ou de prévenir la cinétose chez un passager lors de la conduite d'un véhicule (1), dans lequel le tracé d'un trajet en aval du véhicule (1) est déterminé, dans lequel
sur la base du tracé déterminé du trajet en aval du véhicule (1), une prochaine accélération transversale agissant sur le passager est prédite et, à titre de mesure visant à réduire ou à prévenir la cinétose, une carrosserie et/ou un siège du véhicule (1) occupé par le passager est pivoté, avant que l'accélération transversale prédite ne se produise dans la direction de cette accélération transversale prédite, moyennant quoi le passager est amené à effectuer un contre-mouvement du torse ou au moins de la tête, dans lequel la carrosserie et/ou le siège occupé par le passager est ensuite pivoté, à titre de mesure supplémentaire visant à réduire ou à prévenir la cinétose, dans le sens opposé à celui de l'accélération transversale prédite afin de soutenir le contre-mouvement du passager, dans lequel le contre-mouvement du passager est déterminé et le pivotement de la carrosserie et/ou du siège occupé par le passager dans le sens opposé à celui de l'accélération transversale prédite est effectué de manière synchrone avec le contre-mouvement du passager.

2. Procédé selon la revendication 1,
**caractérisé en ce que**
le pivotement de la carrosserie et/ou du siège occupé par le passager dans le sens de l'accélération transversale prédite est effectué quelques centaines de millisecondes avant que se produise l'accélération transversale prédite, en particulier entre une seconde et 200 millisecondes avant que se produise l'accélération transversale prédite.

3. Procédé selon l'une des revendications précédentes
**caractérisé en ce que**
une délivrance d'informations acoustiques, visuelles et/ou tactiles aux passagers est effectuée à titre de mesure supplémentaire visant à réduire ou à prévenir la cinétose.

4. Procédé selon la revendication 3,
**caractérisé en ce que**
une intensité de délivrance d'informations est prédéfinie en fonction de l'ampleur de l'accélération transversale prédite.

5. Procédé selon l'une des revendications précédentes,
**caractérisé en ce que**
les différentes mesures visant à réduire ou à prévenir la cinétose ne sont mises en œuvre que si la présence d'au moins un critère de cinétose prédéfini est déterminée.

6. Procédé selon la revendication 5,
**caractérisé en ce que**
les différentes mesures visant à réduire ou à prévenir la cinétose ne sont mises en œuvre que si l'accélération transversale prédite dépasse un seuil prédéfini d'accélération transversale et si, en outre, la présence d'au moins un critère de cinétose supplémentaire prédéfini est déterminée.

7. Procédé selon la revendication 6,
**caractérisé en ce que**
un critère de cinétose supplémentaire pris en compte est le fait
- que le passager présente une susceptibilité à la cinétose, et/ou
- qu'une durée de conduite actuelle dépasse un seuil de durée de conduite prédéfini, et/ou
- que le passager effectue une tâche secondaire sans rapport avec la conduite du véhicule (1), et/ou
- que le regard du passager est dirigé vers le bas et/ou détourné des vitres du véhicule (1) et/ou dirigé vers un objet lié à la tâche secondaire, et/ou
- que la température intérieure du véhicule (1) dépasse un seuil de température intérieure prédéfini, et/ou
- qu'un malaise du passager est déterminé.
